# EUROPÄISCHE PATENTANMELDUNG

(11) **EP 0 530 819 A1**
(43) Veröffentlichungstag der Anmeldung: **10.03.1993**
(21) Anmeldenummer: 92115136.1
(22) Anmeldetag: 04.09.1992
(51) Int. Cl.: B60R 21/02, B60R 11/02, B60N 3/00

(54) **Arbeitstisch zum Gebrauch in Kraftfahrzeugen**

(30) Priorität: 06.09.1991 DE 4129676; 26.09.1991 DE 4131998
(71) Anmelder: TECNOCOM MARKETING GmbH, D-45721 Haltern (DE)
(72) Erfinder: Sackmann, Wilfried, Dr.-Ing., W-4358 Haltern 3 (DE)
(74) Vertreter: Herrmann-Trentepohl, Werner, Dipl.-Ing.

(57) **Zusammenfassung**

Bei einem Arbeitstisch zum Gebrauch in Kraftfahrzeugen, welcher im wesentlichen von einer Tischplatte und deren Unterkonstruktion gebildet wird, wobei die Tischplatte aus einer Ruheposition, in der ihre Arbeitsfläche aus dem Bereich des Benutzers entfernt ist, in eine Arbeitsstellung und umgekehrt klappbar ist und eine zur Aufstellung von Gerätschaften, insbesondere der Datenverarbeitung und/oder -übermittlung ausreichende Mindestfläche aufweist, ist erfindungsgemäß vorgesehen, daß die Unterkonstruktion (4) von den Fahrzeugsitzen (1) unabhängig und die Tischplatte (3) derart unterstützt ist, daß sie als Einheit mit den von ihr unterstützen Gerätschaften (6) bei unfallbedingten Beschleunigungen des Fahrzeuges (2) ohne Eingriff des Benutzers (16) aus ihrer Arbeitsstellung (52) in eine dem Benutzer (16) gegen Aufprallen auf gefährliche Ecken und Kanten schützende Sicherheitsstellung (60) selbsttätig schwenkt und in dieser verharrt.

## Beschreibung

Die Erfindung betrifft einen Arbeitstisch zum Gebrauch in Kraftfahrzeugen gemäß dem Oberbegriff des Anspruches 1.

Ein derartiger Arbeitstisch bildet mit seiner Tischplatte eine Arbeitsunterlage, welche es einem Insassen des Kraftfahrzeuges ermöglicht, Arbeiten, insbesondere Schreibarbeiten bequem im Kraftfahrzeug zu erledigen. Die Erfindung bezieht sich insbesondere auf solche Arbeitstische, bei denen die Tischplatte als Unterlage für Gerätschaften der Datenverarbeitung und -kommunikation, also z.B. für PC, Telefax oder Kopiergeräte usw. dient. Die auf diese Weise geschaffene Möglichkeit, in Fahrtpausen, in Staus oder auch während der Fahrt dringende Arbeiten der bezeichneten Art zu erledigen, hat beträchtliche volkswirtschaftliche Bedeutung mit Rücksicht auf die durch wachsende Verkehrsdichte, Baustellen und andere Ursachen verlängerten Reisezeiten.

Die Erfindung geht von einem vorbekannten Arbeitstisch aus, welcher als Teil seiner Unterkonstruktion die Rückenlehne eines der Vordersitze benutzt und die Tischplatte aus ihrer Ruhestellung in der Rückenlehne in ihre Arbeitsstellung sowie umgekehrt klappbar vorsieht. Einer der Nachteile dieser Arbeitstische liegt in der Beschränkung der Benutzung durch die Notwendigkeit, ausschließlich im Fonds des Kraftfahrzeuges auf einem der Rücksitze arbeiten zu müssen und zwar sowohl während der Fahrt, als auch in Fahrtpausen - etwa während eines Staus oder beim Aufenthalt auf Parkplätzen. Dieser Nachteil wiegt schon dann schwer, wenn das Fahrzeug nur mit einer Person besetzt ist. Schwerer wiegt er, wenn ein Beifahrer mitreist, der erfahrungsgemäß eher auf dem vorderen Beifahrersitz als dem Fonds des Kraftfahrzeuges sitzt.

Ein weiterer Nachteil liegt in der Gefährlichkeit der Benutzung derartiger Arbeitstische während der Fahrt. Nicht nur kann der Benutzer bei einem Unfall durch den in Arbeitsstellung befindlichen Tisch verletzt werden. Er und die übrigen Insassen des Kraftfahrzeuges können auch durch die beim Aufprall des Fahrzeuges auf ein Hindernis umherfliegenden Gerätschaften verletzt werden.

Schließlich erzwingt die aufwendige Gestaltung der Vordersitze, die auf ihrer Rückseite eine Aussparung zur mehr oder weniger formschlüssigen Aufnahme der Tischplatte und ihrer Unterkonstruktion, sowie zur Lagerung des Arbeitstisches benötigen, kostspielige Konstruktionen.

Die Erfindung geht einen anderen Weg, dessen Grundgedanke im Anspruch 1 wiedergegeben ist. Weitere Merkmale der Erfindung sind Gegenstand der Unteransprüche.

Dadurch, daß die Unterkonstruktion von den Fahrzeugsitzen unabhängig ist, kann der erfindungsgemäße Arbeitstisch auf jedem Sitz des Fahrzeuges, also auch auf den vorderen Sitzen und dort insbesondere auch vor dem Beifahrersitz benutzt werden. Indem die besondere Unterkonstruktion erfindungsgemäß in der Weise die Tischplatte abstützt, daß diese samt der von ihr getragenen Gerätschaften automatisch und damit unabhängig von derem jeweiligen Benutzer aus ihrer Arbeitsstellung in eine Sicherheitsstellung schwenkt und diese beibehält, sobald ein unfallstiftendes Ereignis eintritt, ist der Benutzer gegen Aufprallen auf gefährliche Kanten und Ecken des Tisches bzw. der Gerätschaften geschützt. Deswegen kann der neue Arbeitstisch ohne Gefahren für den Benutzer auch während der Fahrt in Gebrauch genommen werden. Da schließlich gemäß der Erfindung aus der Tischplatte und den von ihr unterstützten Gerätschaften, beispielsweise durch Verklammerung von Datenverarbeitungs- bzw. Übermittlungsgeräten eine Einheit hergestellt wird, sind auch die übrigen Insassen des Fahrzeuges ebenso wie der Benutzer bei unfallbedingten Beschleunigungen des Fahrzeuges gegen Verletzungen durch umherfliegende Gerätschaften geschützt.

Die Erfindung hat den Vorteil, daß sie auf einfache Weise eine Möglichkeit schafft, die Reisezeit selbst bzw. während der Reise auftretende Verzögerungszeiten gefahrlos in produktive Bürozeiten umzuwandeln. Daraus lassen sich sehr kurze Rückflußzeiten für das für die Anschaffung teurer Gerätschaften benötigte Kapital und damit eine hohe Wirtschaftlichkeit für den Benutzer herleiten. Die Verwirklichung der Erfindung setzt keine Spezialsitze voraus und ist daher vergleichsweise wirtschaftlich.

Vorzugsweise wird die Erfindung mit den Merkmalen des Anspruches 2 verwirklicht. Hierbei wird nämlich zweierlei erreicht. Einerseits nimmt die Tischplatte eine Sicherheitsstellung ein, nach vorn geneigt ist und deswegen nicht in die Ruhe- oder die Arbeitsstellung zurückschlagen kann, obwohl sie in der Sicherheitsstellung nicht arretiert ist. Andererseits dient die Tischplatte als Prallschutz, weil sie mit ihrer Unterseite die Bewegungsenergie eines unfallbedingt nach vorne geschleuderten Benutzers auffängt.

Es ist auch zweckmäßig, diese Sicherheitsstellung der Tischplatte genau festzulegen, wobei auch die Arbeitsstellung gegenüber der Sicherheitsstellung definiert sein sollte. Dies ermöglichen die Merkmale des Anspruches 3. Die zur Lösung dieses Problems vorgeschlagenen Anschläge lassen sich gegebenenfalls verstellen, so daß in der Arbeitsstellung die Tischplatte in die ergonomisch günstigste Stellung gebracht werden kann.

Der unfallbedingt ausgelöste Schwenkvorgang der Tischplatte in die Sicherheitsstellung läßt sich auf unterschiedliche Weise bewirken. Die im Anspruch 4 wiedergegebene Möglichkeit gestattet einfache Ausführungsformen, weil sie die Masse des Tisches und der darauf befindlichen Gerätschaften für den Schwenkvorgang nutzt. Bei der Verwirklichung dieser Merkmale liegt die Gelenkachse des Drehgelenkes vor der Trägheitsachse, also derjenigen Achse, um die im Falle einer unfallbedingten Beschleunigung die Summe der wirksamen Drehmomente Null ist. Je weiter die Drehachse in Fahrtrichtung vor der Drehachse leigt, umso größer ist das bei der Verzögerung des Fahrzeuges gegen den Uhrzeigersinn wirksame Drehmoment und damit die gewünschte Selbsttätigkeitsfunktion des Prallschutzes bei einem Frontalaufprall des Fahrzeuges oder bei starkem Bremsen.

Eine andere Möglichkeit, den unfallbedingt ausgelösten Schwenkvorgang der Tischplatte in die Sicherheitsstellung zuverlässig auszuführen, gibt der Anspruch 5 wieder. Hierbei ist nämlich ein aktiver Antrieb vorgesehen, der der Tischplatte so viel Bewegungsenergie zuführt, daß sie die Sicherheitsstellung auch erreicht.

Wenn man die Möglichkeit eines aktiven Antriebes bei der Verwirklichung der Erfindung verfolgt, ist es zweckmäßig, die Merkmale des Anspruches 6 zu verwirklichen. Hierbei kann man nämlich auch bei starker Verzögerung des Fahrzeuges die Tischplatte in die Sicherheitsstellung schwenken lassen, weil die Entsperrung der Verriegelung unabhängig von der Fahrtrichtung des Fahrzeuges ist. Bei aktiven Antrieben handelt es sich um elektrische, hydraulische oder pneumatische Antriebe, während die erfindungsgemäß vorgeschlagenen passiven Antriebe solche mit Latentenergiespeicher, beispielsweise Federn, Gasdruckspeicher oder pyrotechnische Antriebe sein können.

Das Auslösen des Schwenkvorganges kann auch unter Zuhilfenahme der Merkmale des Anspruches 7 erfolgen. Hierfür sind Sensoren brauchbar, die sowohl auf starke Verzögerungen, als auch auf starke Beschleunigungen ansprechen, so daß der Benutzer sowohl gegen Frontalaufprall des Fahrzeuges, wie auch bei Kollisionen durch das Auffahren eines nachfolgenden zweiten Fahrzeuges geschützt ist.

Einfacher sind Ausführungsformen, die sich der Merkmale des Anspruches 8 bedienen. Hierbei wird die Massenträgheit ausgenutzt, welche zur Entsperrung der Tischverriegelung verwendet wird.

Während in den bisher beschriebenen Ausführungsformen die Tischplatte jeweils nur von einem Sitz erreichbar ist, bietet der Anspruch 10 die Möglichkeit, ihn auch von einem neben dem eigentlichen Benutzertisch befindlichen Fahrersitz aus zu benutzen. Diese Möglichkeit ist deshalb vorteilhaft, weil bei Aufstellung des Tisches vor dem Beifahrersitz in Fahrtpausen auch der Fahrer die Tischplatte mit den darauf befindlichen Gerätschaften benutzen kann. Umgekehrt kann ein Beifahrer den Arbeitstisch verwenden, wenn die Unterkonstruktion vor dem Fahrersitz angeordnet ist.

Die Merkmale des Anspruches 11 dienen zur Schonung der auf dem Tisch abgesetzten Gerätschaften und dem Benutzer zur Erleichterung ihrer Benutzung, weil während der Fahrt die unvermeidlichen Stöße infolge Unebenheiten der Fahrbahn abgefedert werden.

Bei einfacher Ausführungsform der Erfindung werden zweckmäßig die Merkmale des Anspruches 12 verwirklicht. Die C-Form der Tischbeine gestattet es, die Unterkonstruktion des Tisches in den Beinbereich des Benutzers zu verlegen, sofern dieser den Vordersitz einnimmt. Dort steht erfahrungsgemäß hinreichend Platz zur Verfügung, um die Unterkonstruktion so unterzubringen, daß sie nicht stört.

Obwohl der Arbeitstisch im Fahrzeug verklemmt werden kann, empfiehlt sich doch in den meisten Fällen eine formschlüssige Verlegung der Unterkonstruktion des Tisches. Eine einfache Möglichkeit bietet hierfür der Anspruch 13.

Da man in der Regel den Arbeitstisch vor dem Beifahrersitz vorsehen wird, kann man die Unterkonstruktion weiter mit den Merkmalen des Anspruches 14 verwirklichen. Diese Ausführungsform eignet sich insbesondere für Arbeitstische gemäß der Erfindung, die in das Fahrzeug integriert werden. Denn hierbei bildet die Vorderwand des Beifahrersitzes einen Teil der Unterkonstruktion der Tischplatte. Der Tisch befindet sich dann in der Ruheposition im Beinraum des Beifahrers, wo er nicht stört, in der Sicherheitsposition aber in einer Stellung, in der er als Prallschutz verwendet werden kann.

Da der Tisch in den meisten Ausführungsformen der Erfindung gleichzeitig als Prallschutz Verwendung findet, muß er die Sicherheitsstellung augenblicklich, d.h. beim Auftreten einer unfallbedingten Beschleunigung einnehmen können. Dies ermöglichen die Merkmale des Anspruches 15. Danach wird der Tisch bereits dann in die Sicherheitsstellung verbracht, wenn die Feder ausgelöst ist, also ohne daß die volle Beschleunigung abgewartet zu werden braucht, was dazu führen könnte, daß die Tischplatte ihre Sicherheitsstellung zu spät erreicht.

Die hierfür vorgesehene Federung der Tischplatte läßt sich auch dazu verwenden, die Tischplatte, welche mit Gerätschaften versehen relativ schwer sein kann, leichter in die Arbeitsstellung zu verbringen. Das ermöglichen die Merkmale des Anspruches 16. Hierbei wird die Tischplatte durch Federkraft vorgespannt und mit der in der Feder gespeicherten Energie in die Arbeitsstellung verbracht.

Wenn die Tischplatte mit einer sie in die Sicherheitsstellung vorspannenden Feder unterstützt wird, um sie schnell in die Sicherheitsstellung verbringen zu können, kann die Federkraft auf mechanische Weise freigesetzt werden. Das ermöglichen vereinfachte Ausführungsformen der Erfindung. Eine Möglichkeit hierfür bieten die Merkmale des Anspruches 17. Hierbei ist das Ende der Feder mit einer Verriegelung formschlüssig, welche auf mechanischem oder elektromagnetischem Wege entsperrt wird.

Einzelheiten dieser Ausführungsformen der Erfindung sind im Anspruch 18 wiedergegeben. Hierbei kann bei mechanischer Entsperrung eine federnd abgestützte Trägheitsmasse Verwendung finden, jedoch läßt sich diese Ausführungsform auch elektromagnetisch ausbilden. Das ist dann zweckmäßig, wenn man für die Erfassung einer unfallbedingten Beschleunigung eine elektronischen Sensor vorsieht.

In den beschriebenen Ausführungsformen schwenkt die Tischplatte vorzugsweise nach vorn und oben und bietet dadurch ihre Unterseite dem Benutzer. Um unfallbedingte Prallstöße aufzufangen, bieten sich die im Anspruch 19 wiedergegebenen Möglichkeiten.

Weitere Einzelheiten, andere Vorteile und Merkmale der Erfindung ergeben sich aus der nachfolgenden Beschreibung einer Ausführungsform anhand der Figuren in der Zeichnung; es zeigen
- Fig. 1: eine erste Ausführungsform der Erfindung in Seitenansicht, wobei die Tischplatte in Arbeitsposition wiedergegeben ist,
- Fig. 2: in der Fig. 1 entsprechender Darstellung die in ihrer Sicherheitsstellung befindliche Tischplatte mit Aufprallschutz,
- Fig. 3: eine weitere Ausführungsform der Erfindung in der Fig. 1 entsprechender Darstellung,
- Fig. 4: bei schematischer Darstellung der Unterkonstruktion einen in Fahrzeugrichtung geführten Schnitt durch die Tischplatte, welche in einer verschobenen Arbeitsposition gezeichnet ist,
- Fig. 5: eine andere Ausführungsform der Unterkonstruktion links in Seitenansicht und in abgebrochener Darstellung, rechts in abgebrochener Darstellung den unteren Teil,
- Fig. 6: schematisch die Draufsicht auf die Vordersitze eines Kraftfahrzeuges mit eingebautem Arbeitstisch in der Ausführung nach Fig. 4,
- Fig. 7: in der Fig. 6 entsprechender Darstellung diese Ausführungsform, wobei die Tischplatte in ihrer verschobenen Arbeitsposition wiedergegeben ist,
- Fig. 8: links in Seitenansicht und rechts in Draufsicht eine andere Ausführungsform der Erfindung,
- Fig. 9: in der Fig. 8 entsprechender Darstellung eine weiter abgeänderte Ausführungsform der Erfindung,
- Fig. 10a: die Wiedergabe einer Verriegelung der Tischplatte in der Arbeitsposition links in Seitenansicht und rechts in Draufsicht,
- Fig. 10b: eine gegenüber der Ausführungsform nach Fig. 10a abgeänderte Ausführungsform in Seitenansicht und
- Fig. 11: in abgebrochener Darstellung eine mit Federkraft verschwenkbare Tischplatte in Seitenansicht und abgebrochener Darstellung.

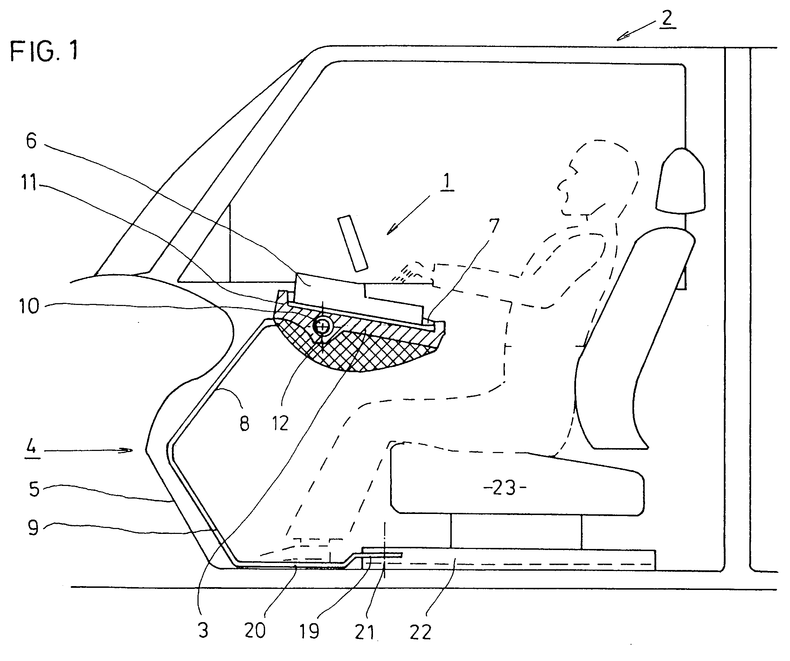

Gemäß der Darstellung der Fig. 1 befindet sich vor dem Beifahrersitz (23) in einem Pkw (2) ein allgemein mit (1) bezeichneter Arbeitstisch. Dieser besteht im wesentlichen aus einer Tischplatte (3) und einer Unterkonstruktion (4), die in den Beinraum (5) des Beifahrers verlegt ist. Auf der Tischplatte (3) befindet sich eine Arbeitsgerätschaft in Form eine PC (6). Das Gerät ist mit nicht dargestellten Klammern in einer Mulde (7) auf der Oberseite des Tisches festgelegt. Die Tischplatte (3) ist aus einer in Fig. 1 nicht dargestellten Ruheposition, in der sie unter den oberen Schenkel (8) der allgemein C-förmigen Tischbeine (9) geklappt ist, in die dargestellte Arbeitsposition geschwenkt. Zu diesem Zweck ist die von den Fahrzeugsitzen unabhängige Unterkonstruktion (4) mit der Tischplatte (3) durch ein Drehgelenk (10) verbunden, welches mit seiner Gelenkachse quer zur Fahrtrichtung angeordnet ist. Das Drehgelenk (10) ist hinter der Vorderkante (11) des Tisches in einer solchen Entfernung angeordnet, daß der Tisch im Drehgelenk (10) nach unten in Richtung auf die Ruhestellung schwenkt und sich in der Arbeitsstellung um das Gelenk (10) im labilen Gleichgewicht um die Gelenkachse (12) befindet.

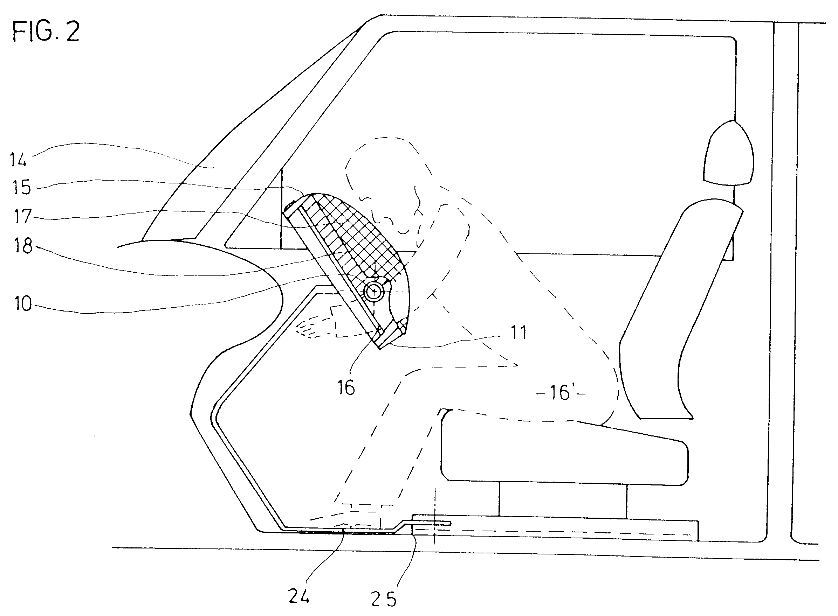

Die Fig. 2 zeigt die Wirkung eines Frontalaufpralls des Fahrzeuges, wenn sich vor dem Aufprall die Teile aus der aus Fig. 1 ersichtlichen Stellung befunden haben. Hierbei wird durch die beim Aufprall auftretende Beschleunigung die Tischplatte (3) in ihre Sicherheitsstellung nach oben und vorn in Richtung auf die Windschutzscheibe (14) des Fahrzeuges geschwenkt. In dieser Stellung ist die Schwenkbewegung der Tischplatte im Drehgelenk (10) erschöpft. Die Tischplatte ist dann schräg nach vorn geneigt und verharrt deswegen in der Sicherheitsstellung im stabilen Gleichgewicht. Um in diese Stellung zu gelangen, schwenkt die Vorderkante (11) der Tischplatte nach hinten und unten, während die dem Fahrer in der Arbeitsstellung zugekehrte rückwärtige Tischkante (15) nach oben und vorn schwenkt. Die Folge dieser Bewegung ist, daß die Unterseite (16) der Tischplatte (3) sich vor Kopf und Brust des Beifahrers (16) stellt. Die Unterseite (16) trägt einen Prallschutz, z.B. ein Prallkissen (17) oder Air-bag, so daß die Bewegungsenergie des Beifahrers (16) schonend vernichtet, d. h. dieser nicht verletzt wird.

Ist das Prallkissen (17) als Air-bag ausgebildet, so verschwindet es im Normalzustand in dem hohl ausgebildeten Korpus (18) der Tischplatte (3).

In Fig. 1 ist auch die Festlegung der Unterkonstruktion (4), die dort aus einem oder mehreren C-förmigen Tischbeinen (9) besteht, im Fahrzeug wiedergegeben. Danach ist das abgekröpfte Ende (19) des unteren freien Schenkels (20) jedes Tischbeines in eine Aussparung (21) in eine Schiene (22) eingeführt und mit dieser formschlüssig. Die Schiene (22) dient zur Verschiebung des Sitzes (23) nach vorn und hinten in Fahrzeuglängsrichtung. Vor der Schiene (22) stützt sich der vor dem abgekröpften Ende liegende horizontale Abschnitt (24) auf dem Boden (25) des Fahrzeuges ab.

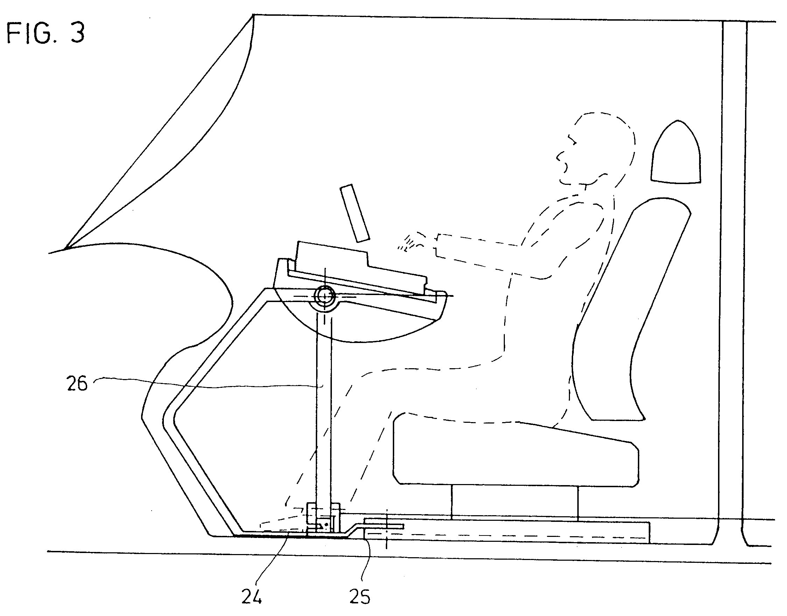

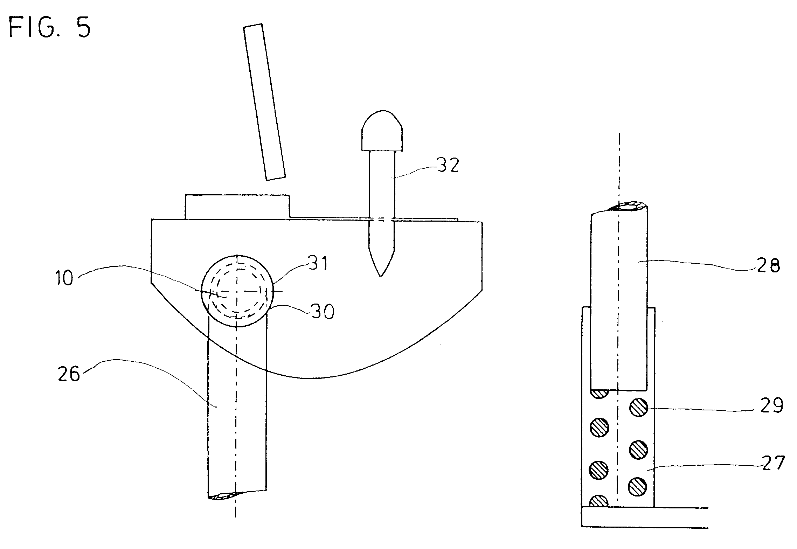

Die Unterkonstruktion des Arbeitstisches ist in der Ausführungsform nach Fig. 3 abgeändert. Sie unterscheidet sich von der Ausführungsform nach den Fig. 1 und 2 durch eine oder mehrere in diesem Fall zusätzliche Stützen (26), welche in der Darstellung der Fig. 5 genauer wiedergegeben sind. Danach ist die Stütze (26) ein Rohr, welches in eine Hülse (27) eingeführt werden kann, die zur Verklemmung des Rohrendes (28) Schrauben (29) trägt. Mit dieser Vorrichtung kann die Arbeitshöhe des Tisches eingestellt werden. In dieser Ausführungsform ist der Tisch in seiner Arbeitsstellung neigungsverstellbar mit Hilfe eines Rändelrades (30), welche die Drehbarkeit des Tisches auf dem drehbeweglichen Teil (31) des Drehgelenkes (10) in verschiedenen Positionen festzustellen ermöglicht. Außerdem zeigt die Fig. 5 im linken Teil, daß der Tisch auch eine Arbeitsleuchte (32) als weiterer Gerätschaft tragen kann.

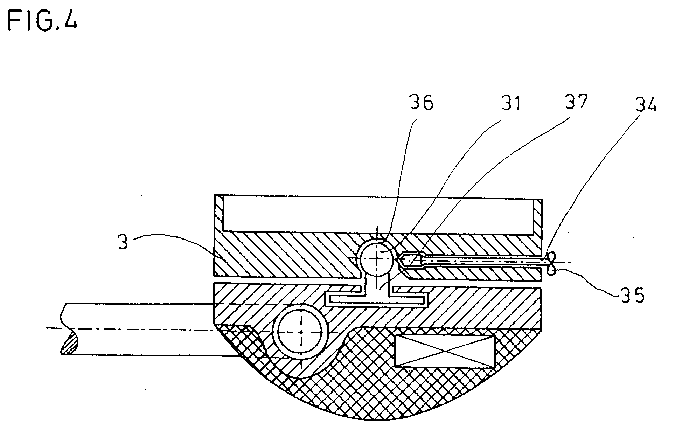

Eine andere Möglichkeit der Tischverlagerung ist in Fig. 4 wiedergegeben. Hiernach läßt sich die Tischplatte (3) über ein allgemein mit (33) bezeichnetes Schienensystem seitlich verschieben. Das Schienensystem hat einen beweglichen Arm (37) mit einer Gelenkkugel (31), auf der sich die Tischplatte (3) abstützt. Die Gelenkkugel hat eine geriffelte Oberfläche (36), die mit dem Ende einer Riegelstange (34) formschlüssig gemacht werden kann, wenn die Handhabe (35) betätigt wird. Dann ist die Drehbewegung der Tischplatte (3) um den feststehenden Teil (36) des Gelenkes gesperrt. Dieser unterstützt die Tischplatte (3) im Schwerpunkt.

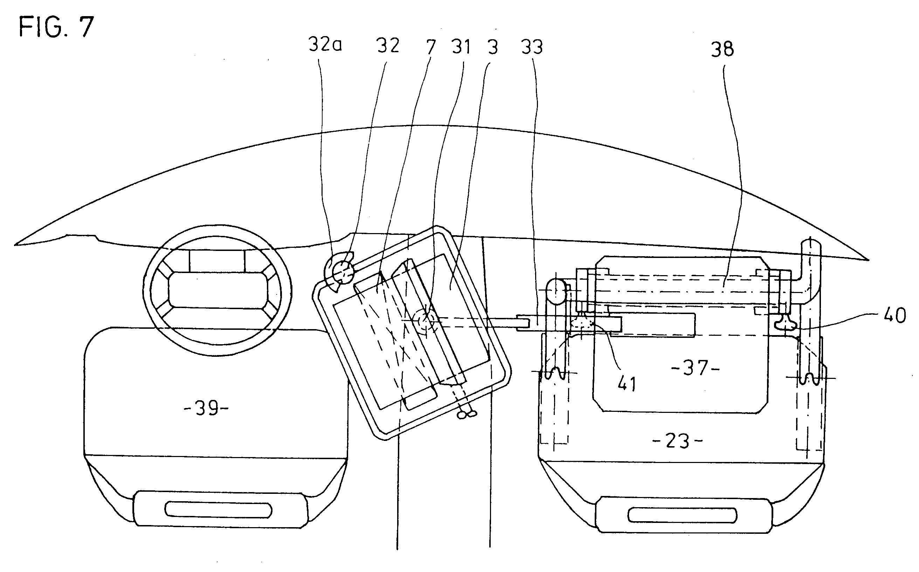

Wie sich aus der Darstellung der Fig. 7 ergibt, ist das Schienensystem (3) über eine Konsole (37) mit dem drehbaren Teil (38) des Drehgelenkes verbunden. Das Schienensystem ist mehrfach teleskopierbar und kann vom Fahrersitz (39) aus ausgezogen werden. Dann steht die Tischplatte (3) mit ihrer Mulde (7) bzw. der darin ruhenden Gerätschaft in einer ergonomisch günstigen Position an der Seite des Fahrersitzes (39). In dieser Position kann der Fahrer auf dem Fahrersitz (39) die Gerätschaft benutzen. Die Abschirmung (32a) der Leuchte (32) läßt sich um die Achse der Leuchte in eine blendfreie Position verbringen.

Mit Hilfe von Feststellschrauben (40 und 41) kann die Konsole (37) in verschiedenen Neigungen festgelegt werden.

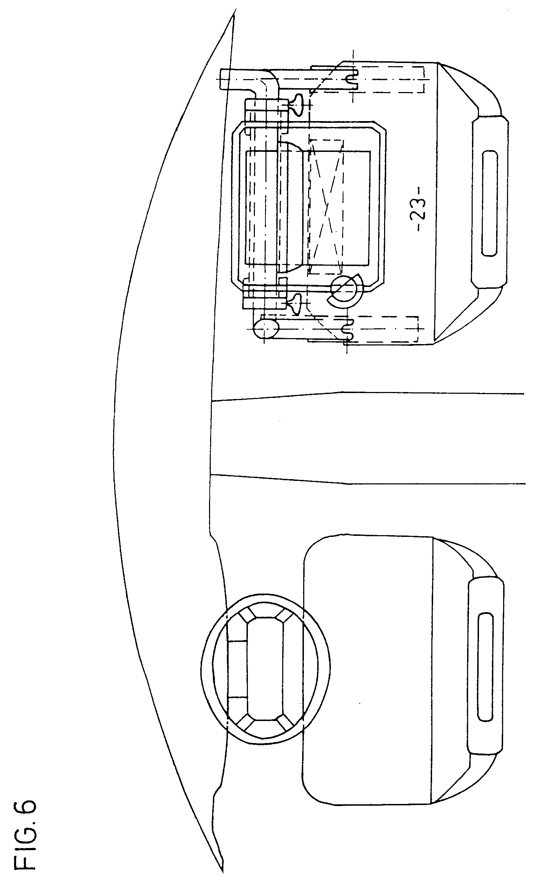

Die Fig. 6 zeigt dagegen die Stellung des Tisches (3) vor dem Beifahrersitz (23).

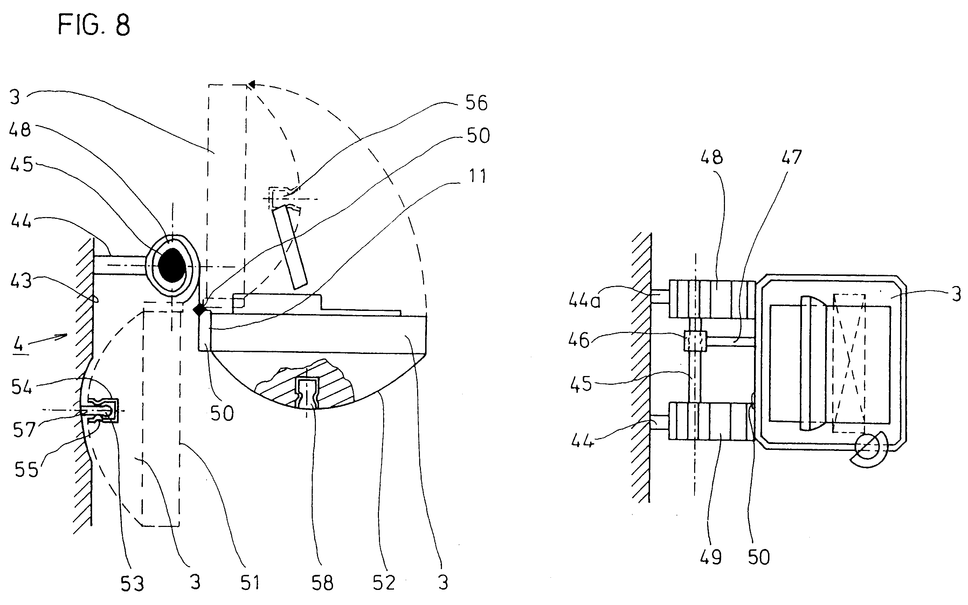

In den Darstellungen der Fig. 8 bis 11 bildet einen Teil der Unterkonstruktion (4) die Vorderwand (43) des Beifahrersitzes. Über einen horizontalen Ausleger (44) ist die Achse (45) des Drehgelenkes verlagert. Der drehbare Teil (46) des Drehgelenkes trägt auf einem Ausleger (47) die Tischplatte (3) mit ihren Gerätschaften. Um die beiden Enden des feststehenden Teils (45) des Drehgelenkes im Bereich der Konsolen (44 und 44a) sind die inneren Enden von Spiralfedern (48, 49) gelagert. Die freien Federenden tragen Stützprofile (50) für die Vorderkante (11) der Tischplatte (3). Die Tischplatte (3) kann aus ihrer nach unten und vorn geklappten Ruheposition (51) unter Unterstützung durch die Kraft der Federn (48, 49) in die Arbeitsstellung (52) und gegen die Federkraft in die Ruheposition (51) verstellt werden.

In der Ruheposition ist die Tischplatte (3) mit einer formschlüssigen Verriegelung (53) versperrt. Diese Verriegelung weist eine Klemme (54) mit einer federnden Ringnut (55) auf, deren nach innen weisende Wände unter einem Kopf (56) eines Riegels (57) einrastet, der aus der Vorderwand (43) vorsteht. Die Klemme (58) ist offen, so daß sie am Hals des Kopfes (56) einrasten kann, der dementsprechend ringförmig ist.

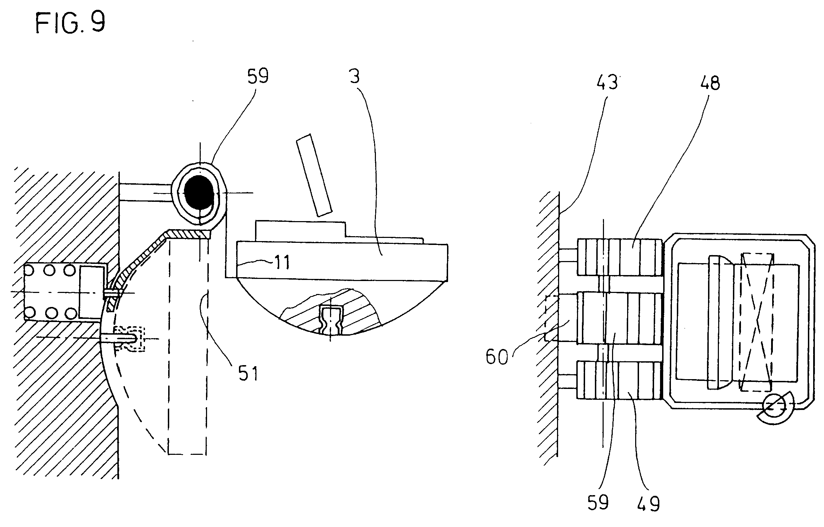

Während in der Darstellung der Fig. 8 die Federn (48, 49) zur Unterstützung der Verstellung der Tischplatte (3) aus der Ruheposition (51) in die Arbeitsstellung (52) dienen, ist in der Ausführungsform nach Fig. 9 eine weitere und wesentlich stärkere Spiralfeder (59) auf einer mittleren Konsole (60) an der Vorderwand (43) des Beifahrersitzes angebracht. Diese Feder (59) stützt sich ebenso wie die Federn (48 und 49) mit einem an ihrem freien Ende angebrachten Profil (50) auf der Vorderkante (11) der Tischplatte (3) ab. Sie dient ebenso wie die Federn (48 und 49) zur Unterstützung der Drehbewegung der Tischplatte (3) aus der Ruhestellung in die Arbeitsstellung.

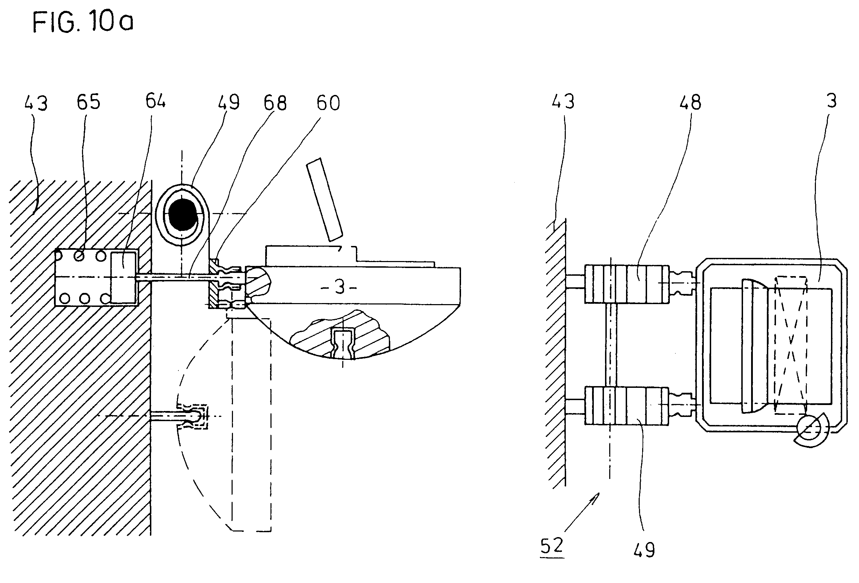

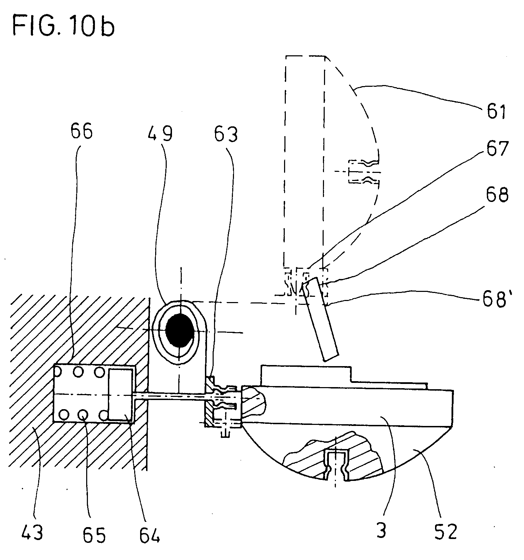

In der Ausführungsform der Fig. 10a dienen die Federn (48, 49) dagegen dazu, den Tisch (3) aus der Arbeitsstellung (52) in die in Fig. 10b wiedergegebene Sicherheitsstellung (60) zu verstellen. In diesem Falle sind die freien Federenden, wie am Beispiel der Feder (49) für deren Ende dargestellt, mit einer Aussparung (63) versehen. In dieser Aussparung greift normalerweise die Kolbenstange (68) des Kolbens (64) ein, der als Trägheitsmasse dient. Die Kolbenstirnfläche stützt sich auf einer Feder (65) ab, welche in einer zylindrischen Büchse (66) der Vorderwand (43) untergebracht und abgestützt ist. Sie hält die Kolbenstange in der gezeichneten Stellung, in der die Federn (48, 49) gespannt sind.

Wenn das Fahrzeug auf ein Hindernis auffährt, wird die Trägheitsmasse des Kolbens (64) nach vorn gegen die Kraft der Feder (65) geschleudert, so daß die Kolbenstange aus der Aussparung (63) herausgezogen wird. Dadurch wird die Kraft der Federn (48, 49) frei und schleudert die Tischplatte (3) aus der Arbeitsposition (52) in die in Fig. 10b gestrichelt wiedergegebene Sicherheitsstellung (60). Die Vorderkante der Platte (3) trifft dabei auf einen oder mehrere Puffer (67), die den Aufprall der Platte (3) auf einen Anschlag (68) abbremsen.

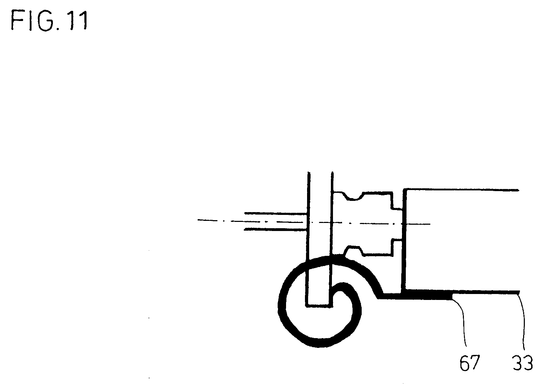

In Fig. 11 ist eine abgeänderte Ausführungsform der Federn wiedergegeben. Danach stützen sie sich mit ihren freien Enden (67) auf der Unterseite der Tischplatte (3) ab.

## Patentansprüche

1. Arbeitstisch zum Gebrauch in Kraftfahrzeugen, welcher im wesentlichen von einer Tischplatte und deren Unterkonstruktion gebildet wird, wobei die Tischplatte aus einer Ruheposition, in der ihre Arbeitsfläche aus dem Bereich des Benutzers entfernt ist, in eine Arbeitsstellung und umgekehrt klappbar ist und eine zur Aufstellung von Gerätschaften, insbesondere der Datenverarbeitung und/oder -übermittlung ausreichende Mindestfläche aufweist, dadurch gekennzeichnet, daß die Unterkonstruktion (4) von den Fahrzeugsitzen (1) unabhängig und die Tischplatte (3) derart unterstützt ist, daß sie als Einheit mit den von ihr unterstützten Gerätschaften (6) bei unfallbedingten Beschleunigungen des Fahrzeuges (2) ohne Eingriff des Benutzers (16) aus ihrer Arbeitsstellung (52) in eine dem Benutzer (16) aus ihrer Arbeitsstellung (52) in eine dem Benutzer (16) gegen Aufprallen auf gefährliche Ecken und Kanten schützende Sicherheitsstellung (60) selbsttätig schwenkt und in dieser verharrt.

2. Arbeitstisch nach Anspruch 1, dadurch gekennzeichnet, daß die Tischplatte in ihrer Sicherheitsstellung (60) nach oben über die Ruhe- und die Arbeitsstellung (50, 52) in einem die Tischplatte (3) mit der Unterkonstruktion (4) verbindenden Drehgelenk (10) schwenkt, auf dessem drehbaren Teil die Tischplatte (3) abgestützt ist und mit seiner Gelenkachse (12) quer zur Fahrtrichtung angeordnet ist, wobei die Unterseite (16) der Tischplatte (3) als Prallschutz dient.

3. Arbeitstisch nach einem der Ansprüche 1 oder 2, dadurch gekennzeichnet, daß zur Begrenzung der Schwenkbewegung der Tischplatte (3) in die Sicherheitsstellung (60) Anschläge (67) vorgesehen sind.

4. Arbeitstisch nach einem der Ansprüche 1 bis 3, dadurch gekennzeichnet, daß die Tischplatte (3) einschließlich der auf ihr abgestützten Gerätschaften (6) im labilen Gleichgewicht um die Gelenkachse (12) im Drehgelenk (10) in ihrer Arbeitsstellung (52) und im stabilen Gleichgewicht in ihrer Sicherheitsstellung (60) aufgehängt ist.

5. Arbeitstisch nach einem der Ansprüche 1 bis 3, dadurch gekennzeichnet, daß zur Bewegung der Tischplatte (3) in die Sicherheitsstellung (60) ein aktiver oder ein passiver Antrieb vorgesehen ist.

6. Arbeitstisch nach einem der Ansprüche 1 bis 5, dadurch gekennzeichnet, daß die Tischplatte (3) in der Arbeitsstellung (52) gegen Drehbewegungen im Drehgelenk (10) mit einer Verriegelung (64, 65, 66) versperrt ist und die Verriegelung bei unfallbedingten Beschleunigungen aufgehoben wird, um die Tischplatte (3) in ihre Sicherheitsstellung (60) schwenken zu lassen.

7. Arbeitstisch nach einem der Ansprüche 1 bis 6, dadurch gekennzeichnet, daß zur Auslösung des Schwenkvorganges der Tischplatte (3) aus ihrer Arbeitsstellung (52) in die Sicherheitsstellung (60) Trägheitssensoren dienen.

8. Arbeitstisch nach einem der Ansprüche 1 bis 6, dadurch gekennzeichnet, daß als Trägheitssensor Gewicht dient, welches eine Sperrklinke der Tischverriegelung belastet.

9. Arbeitstisch nach einem der Ansprüche 1 bis 8, dadurch gekennzeichnet, daß die Unterkonstruktion (4) der Tischplatte (3) vor dem Beifahrersitz (23) untergebracht ist.

10. Arbeitstisch nach einem der Ansprüche 1 bis 9, dadurch gekennzeichnet, daß die Tischplatte (3) auf der Unterkonstruktion (4) seitlich vor einen benachbarten Sitz (39) verschiebbar ist.

11. Arbeitstisch nach einem der Ansprüche 1 bis 10, gekennzeichnet durch eine federnde Unterstützung (48, 49, 59) der Tischplatte (3) im Drehgelenk (10) zur Verstellung des Arbeitstisches (1) aus der Ruhestellung (50) in die Arbeitsstellung (52).

12. Arbeitstisch nach einem der Ansprüche 1 bis 11, dadurch gekennzeichnet, daß die Unterkonstruktion wenigstens ein C-förmiges Tischbein (4) aufweist, das auf seinem oberen Ende (8) die Tischplatte (3) trägt und mit seinem unteren Ende (24) auf dem Fahrzeugboden (25) abgestützt ist.

13. Arbeitstisch nach Anspruch 12, dadurch gekennzeichnet, daß das Tischbein (4) mit seinem freien Ende (25) in einen Schlitz der Verlagerung (22) des Benutzersitzes (23) zur Feststellung des Tisches (1) einführbar ist.

14. Arbeitstisch nach einem der Ansprüche 1 bis 13, dadurch gekennzeichnet, daß wenigstens ein Teil der Unterkonstruktion (4) der Tischplatte (3) von der Vorderwand (43) des Beifahrersitzes (23) gebildet wird, mit der die Tischplatte (3) durch wenigstens eine Gelenkkonsole (44, 44a) verbunden ist, wobei die Tischplatte (3) in ihrer Ruheposition (50) nach unten und vorn, in ihrer Sicherheitsposition (60) nach oben und vorn geklappt ist.

15. Arbeitstisch nach einem der Ansprüche 1 bis 14, dadurch gekennzeichnet, daß die Tischplatte (3) federnd in ihrer Sicherheitsstellung (60) vorgespannt ist.

16. Arbeitstisch nach Anspruch 15, dadurch gekennzeichnet, daß die Tischplatte mit Hilfe der sie in die Arbeitsstellung (52) vorspannenden Federn (48, 49) aus der Arbeitsstellung (52) in die Sicherheitsstellung klappbar ist.

17. Arbeitstisch nach einem der Ansprüche 1 bis 16, dadurch gekennzeichnet, daß die Vorderkante (11) des Tisches (3) mit dem freien Ende (50) der Federn (48, 49, 59) unterstützt ist, wobei die Federn (48, 49, 59) mit der Sperrklinke formschlüssig sind, die mechanisch oder elektromagnetisch entsperrbar ist.

18. Arbeitstisch nach Anspruch 17, dadurch gekennzeichnet, daß für den Formschluß mit dem freien Ende der Federn (48, 49) als Sperrklinke eine Zugstange eines Kolbens (64) vorgesehen ist, der als federnd abgestützte Trägheitsmasse dient und bei elektromagnetischer Entsperrung als Kern eines Elektromagneten ausgebildet ist, der mit einem elektronischen Sensor zusammenwirkt.

19. Arbeitstisch nach einem der Ansprüche 1 bis 18, dadurch gekennzeichnet, daß die Tischplatte (3) in der Sicherheitsstellung (61) dem Benutzer ihre Unterseite (18) bietet, die mit einem aktiven oder passiven Aufprallschutz (17) versehen ist.
